# EUROPEAN PATENT SPECIFICATION

(11) **EP 1 496 241 B1**
(45) Date of publication and mention of the grant of the patent: **27.06.2007**
(21) Application number: 04016027.7
(22) Date of filing: 07.07.2004
(51) Int. Cl.: F02M 35/10, B62J 17/00, B62J 39/00

(54) **Motorcycle having a wind guide structure**
Motorrad mit einer Windführungseinrichtung
Motocyclette avec un dispositif de guidage du vent

(30) Priority: 07.07.2003 JP 2003192903; 11.09.2003 JP 2003319232
(43) Date of publication of application: 12.01.2005
(73) Proprietor: YAMAHA HATSUDOKI KABUSHIKI KAISHA, Iwata-shi, Shizuoka-ken (JP)
(72) Inventor: Oohira, Masaru, Iwata-shi Shizuoka-ken (JP)
(74) Representative: Grünecker, Kinkeldey, Stockmair & Schwanhäusser Anwaltssozietät

(56) References cited:
- EP-A- 0 755 819
- EP-A- 1 063 160
- EP-A- 1 108 585
- EP-A- 1 314 635
- PATENT ABSTRACTS OF JAPAN vol. 2002, no. 05, 3 May 2002 (2002-05-03) & JP 2002 019672 A (YAMAHA MOTOR CO LTD), 23 January 2002 (2002-01-23)

## Description

The invention relates to a motorcycle having a wind guide structure, wherein a radiator is provided rearwardly of a front wheel of the motorcycle.

Such a conventional motorcycle is, for example, known from JP-A-2002-19672. Therein, above (in front of) a radiator a wind guide plate is disposed with an additional wind guide plate for directing a wind to the radiator, while below (behind) the radiator a fan is disposed for pulling outside air through the radiator, and below this fan a shroud is disposed.

In front of the radiator an inner fender is disposed and in this inner fender a wind guide louver is formed for introducing a wind to the radiator. This louver has vanes whose direction is set approximately in the horizontal direction. Air passing through the radiator flows through a shroud to be discharged to the outside of the vehicle through a ventilation opening provided in the bottom part of the inner fender.

In such a conventional system, since for the purpose of effectively cooling the radiator, an additional wind guide plate is required or the wind is introduced forcibly to cool the radiator by the fan. Therefore, the structure is complicated and expensive.

EP-A-1 063 160 according to the preamble of claim 1 discloses a motorcycle having a wind guide structure, wherein a radiator is provided rearwardly of a front wheel of the motorcycle. A wind guide path for guiding a running wind passing through the radiator is formed by a body cover along a bottom part of the body of the motorcycle.

It is an object of the invention to provide a motorcycle having a wind guide structure capable of cooling a radiator efficiently with simple construction.

This object is solved by the features of claim 1.

Since the radiator is disposed obliquely such that an upper end thereof is positioned further rearward than a lower end thereof and that the induction port is disposed to guide the running wind into the radiator approximately vertically, the velocity of the running wind passing through the radiator is increased. Thereby, the cooling performance of the radiator is improved. A flat plate portion of body cover above said induction port improves introducing running wind to said induction port.

According to an embodiment of the invention, a flap member is disposed in front of said radiator, said flap member is formed with a plurality of guide vanes for guiding a running wind toward said radiator, said guide vanes are parallel in a lateral direction and inclined in a longitudinal direction of the motorcycle.

In a preferred embodiment rearwardly of a discharge port of the wind guide path a ceiling wall is located a step higher than a bottom of the body, and that an upwardly recessed portion is formed adjoining said discharge port.

Further preferably, a connecting portion of the lower end of a vertical wall covering a region behind said front wheel and the forward end of said body bottom, or a lower end corner of said body cover, is formed into a curved surface.

According to a further preferred embodiment, on the body bottom part of said body cover is formed a hanging portion projecting downwardly from said body bottom, at a position where the rear end of said recessed portion is formed.

It is further preferred that the wind guide path is formed extending rearwardly from said induction port and said radiator is disposed in the wind guide path. Therein, it is still further preferred that a small opening smaller than said induction port is formed above said flat plate portion so that a running wind can be introduced into the body cover through the small opening, and/or in that an engine side wind guide path for introducing a running wind toward an engine is provided adjacent to said wind guide path.

In particular, it is preferred that an engine side wind guide path extends from a region behind said front wheel to a region near an exhaust pipe, an air cleaner or a belt chamber on the engine side. Moreover, it is possible that an engine side wind guide path is formed by said body cover forming the external appearance of the body.

Also, it is preferred that said guide vanes are inclined in particular such that a rear end thereof is positioned lower than a forward end thereof, wherein preferably an inclination angle is larger for a guide vane at a lower position with respect to a guide vane at a higher position.

In a preferred embodiment rearwardly of a front wheel is disposed a radiator, a wind guide path of a running wind passing through the radiator is formed by a body cover, a discharge port of the wind guide path on the downstream side from the radiator is formed in the body cover at the bottom part of a body, and rearwardly of the discharge port is formed a ceiling wall located a step higher than the bottom of the body, so that an upwardly recessed portion is formed adjoining the discharge port. Therefore, since the running wind flowing under the body causes a negative pressure in the recessed portion and the air in the wind guide path can be drawn out easily, a smoother flow of the running wind is obtained in the wind guide path, so that cooling efficiency of the radiator will be increased by a simple improvement in the construction.

Therein, preferably a running wind flowing downwardly from the front face of a vertical wall of the body cover runs rearwardly through the lower end corner along the body bottom. In this case, since the lower end corner is formed in the shape of a curved surface and the running wind flows more smoothly along the curved surface than when the corner is formed into an edge-like shape, generation of a turbulent flow is suppressed in this part and the running wind running rearwardly along the body bottom flows smoothly without being hindered by the turbulent flow, so that the negative pressure at the discharge port of the wind guide path can be increased, resulting in a faster flow of the running wind in the wind guide path as well.

Further, preferably on the body bottom part of the body cover is formed a hanging portion projecting downwardly from the body bottom, at a position where the rear end of the recessed portion is formed. Therefore, the water cutting ability can be improved by the hanging portion.

Still further, preferably above the induction port of the wind guide path is formed a flat plate portion for introducing a running wind to the induction port, so that the running wind striking against the flat plate portion is guided by the flat plate portion to be introduced to the induction port. Therefore, the radiator can be cooled down effectively. In addition, since the radiator is disposed obliquely such that its upper end is positioned further rearward than its lower end, a running wind entering obliquely from the induction port flows into the radiator approximately vertically, which increases the velocity of the running wind passing through the radiator, thereby improving the cooling performance of the radiator.

As described above, a wind guide path is formed extending rearwardly from the induction port and the radiator is disposed in the wind guide path. Therefore, the running wind passes effectively through the wind guide path, so that the radiator disposed in this wind guide path can be cooled down more effectively.

Further, preferably above the flat plate portion is formed a small opening smaller than the induction port so that a running wind is introduced into the body cover through the small opening. Therefore, cooling effect on the engine can be improved further.

Still further, preferably the running wind flowing into the engine side wind guide path is guided to the wind guide path and sent rearwardly from the rear end opening toward the engine. Therefore, the engine can be cooled down.

Moreover, preferably the engine side wind guide path extends from a region behind the front wheel to a region near an exhaust pipe, an air cleaner or a belt chamber on the engine side. Therefore, these engine parts of which cooling is especially desired can be effectively cooled down.

Additionally, the engine side wind guide path is preferably formed by the body cover forming the external appearance of the body. Therefore, no separate parts for the wind guide path need be provided, securing the cooling effect.

According to the further preferred embodiment, the guide vanes of the flap member are each inclined such that its rear end is positioned lower than the forward end, and the inclination angle is larger for a guide vane at a lower position. Therefore, the running wind can be directed efficiently toward the radiator, and since the inclination angle of the guide vane is increased toward the bottom, stones or the like caught by the front wheel can be blocked by the guide vanes, preventing their collision against the radiator.

Further preferred embodiments of this invention are subject to the subclaims.

In the following, the invention will be explained in greater detail by means of preferred embodiments with reference to the accompanying drawings, wherein:
- Fig. 1: is a front view of covers of a scooter type vehicle according to embodiment 1 of this invention;
- Fig. 2: is a side view corresponding to Fig. 1 according to the embodiment 1 of this invention;
- Fig. 3: is a sectional view taken along line A-A of Fig. 1 according to the embodiment 1 of this invention;
- Fig. 4: is a sectional view taken along line B-B of Fig. 1 according to the embodiment 1 of this invention;
- Fig. 5: is a sectional view taken along line C-C of Fig. 1 according to the embodiment 1 of this invention;
- Fig. 6: is a front view of a flap according to the embodiment 1 of this invention;
- Fig. 7: is a side view of the flap according to the embodiment 1 of this invention;
- Fig. 8: is a front view of a second inner fender according to the embodiment 1 of this invention;
- Fig. 9: is a right side view corresponding to Fig. 8 according to the embodiment 1 of this invention;
- Fig. 10: is a plan view corresponding to Fig. 8 according to the embodiment 1 of this invention;
- Fig. 11: is a sectional view taken along line D-D of Fig. 2 according to the embodiment 1 of this invention;
- Fig. 12: is a sectional view taken along line E-E of Fig. 2 according to the embodiment 1 of this invention;
- Fig. 13: is a sectional view corresponding to Fig. 3 according to embodiment 2 of this invention;
- Fig. 14: is a sectional view taken along line F-F of Fig. 13 according to the embodiment 2 of this invention;
- Fig. 15: is a sectional view corresponding to Fig. 3 according to embodiment 3 of this invention; and
- Fig. 16: is a sectional view taken along line G-G of Fig. 15 according to the embodiment 3 of this invention.

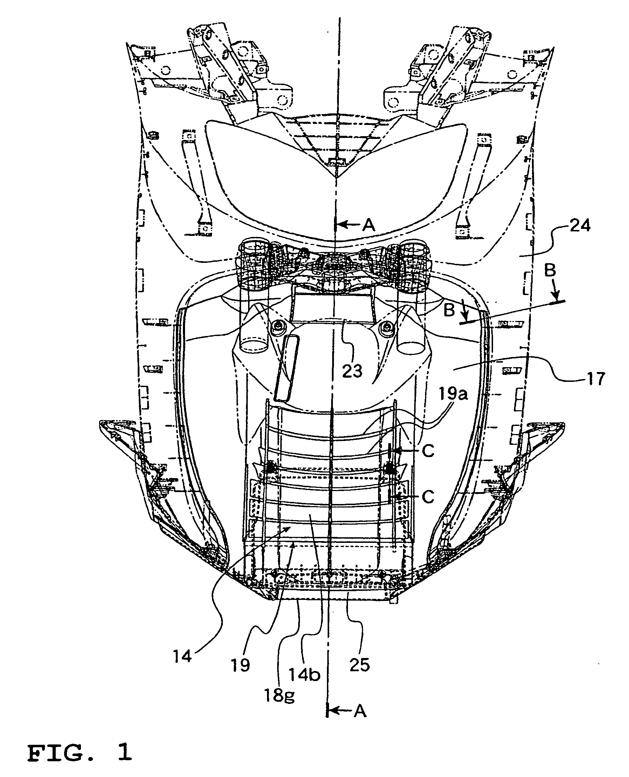

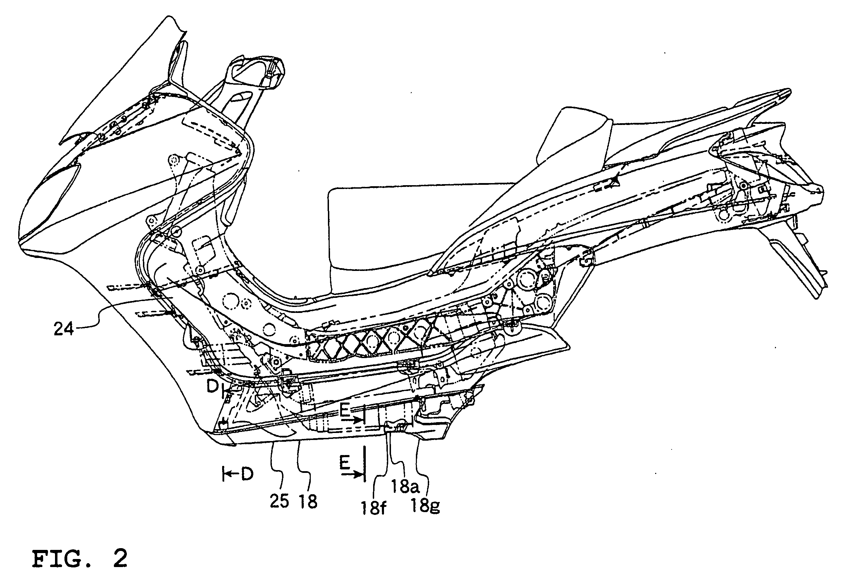

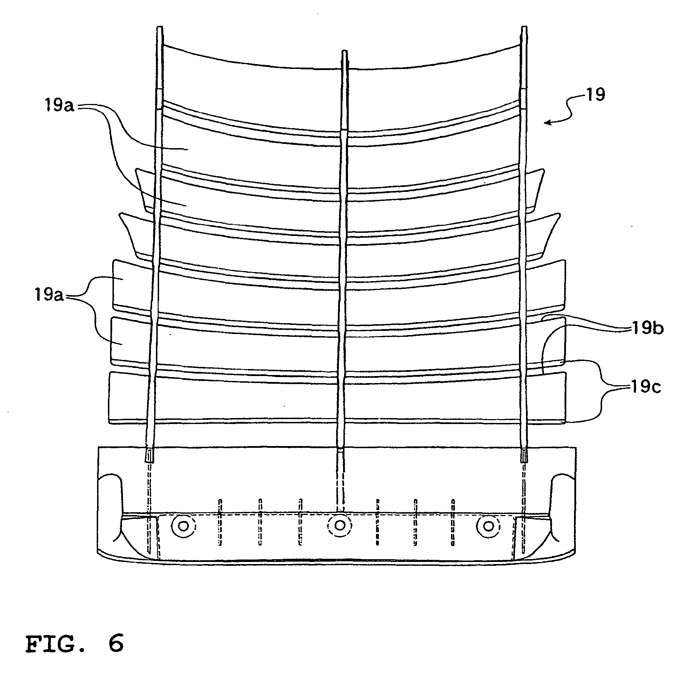

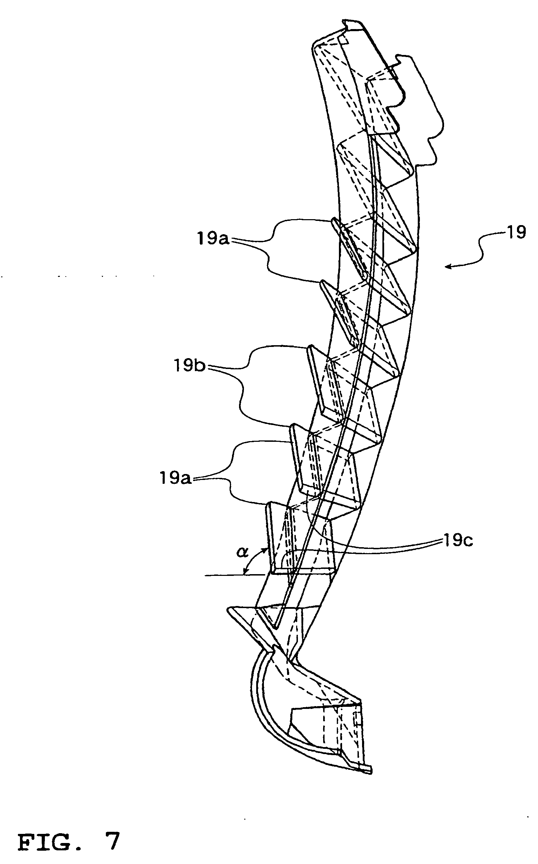

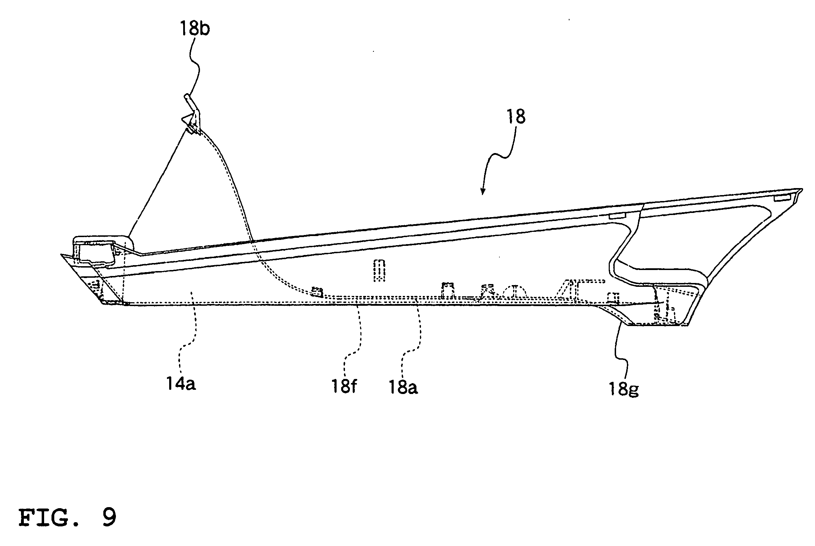

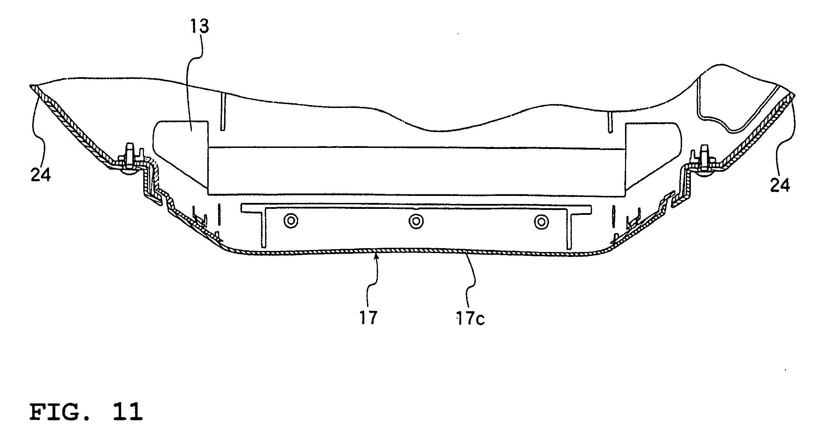

In Fig. 1 to Fig. 12 a first embodiment of this invention is shown.

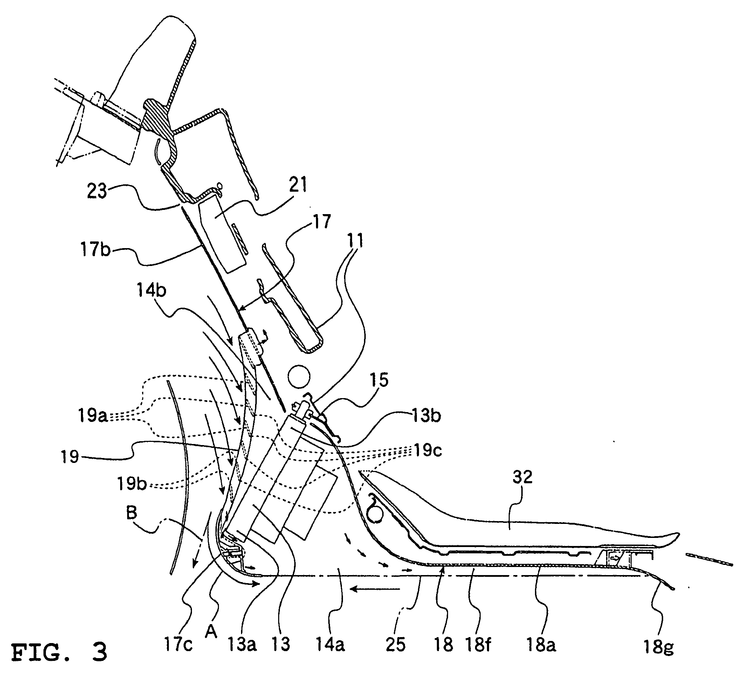

First, referring to the construction, numeral 11 in Fig. 3 designates a body frame. On the body frame 11 is supported rearwardly of a front wheel (not shown) and in the lower part of the body front, through a stay 15, a radiator 13 for cooling engine cooling water.

The radiator 13 has a rectangular shape with a dimension longer in the lateral direction than in the vertical direction as seen from the front, assuming a flat configuration with a smaller thickness in the longitudinal direction of the vehicle and provided with tanks at both left and right ends. The radiator 13 is disposed obliquely such that its upper end 13b is positioned further rearward than its lower end 13a.

The radiator 13 is provided in a wind guide path 14, and the wind guide path 14 is formed of a body cover covering a region behind the front wheel, or a first inner fender 17, and another body cover covering the bottom part of the body, or a second inner fender 18.

In the first inner fender 17 (body cover) is formed behind the front wheel and on the lower side an induction port 14b, of the wind guide path 14, for a running wind to be introduced to the radiator 13, and the radiator 13 is disposed rearwardly of and in the vicinity of the induction port 14b.

On the first inner fender 17 is formed a flat plate portion 17b above the induction port 14b to introduce a running wind to the induction port 14b when the running wind strikes against the flat plate portion 17b.

The induction port 14b is provided with a flap member 19, which is formed with a plurality of guide vanes 19a for guiding the running wind toward the radiator 13, as shown in Figs. 3, 6 and 7. These guide vanes 19a are disposed in vertical relation and generally in parallel with each other. Each of the guide vanes 19a has a plate shape, and is disposed along the width direction of the vehicle and inclined toward the radiator 13 so that its rear end 19c is positioned below its front end 19b. The inclination angle α (alpha) becomes larger for a guide vane 19a at a lower position so that a running wind is sent to the radiator 13 through spaces between the guide vanes 19a while guided thereby.

Further, the first inner fender 17 is formed with a lower end corner 17c below the induction port 14b, or a connecting portion of the lower end of a vertical wall covering a region behind the front wheel and the forward end of the body bottom, in the shape of a curved surface with a given radius of curvature. Such a curved surface allows an air flow coming along the vertical wall to run along the curved surface therearound smoothly down to the body bottom, as shown in Fig. 3 by arrow A. By the way, if the connecting portion has an angular shape instead of the curved surface, the air flowing along the vertical wall will separate from the wall at the corner, as shown in Fig. 3 by arrow B.

Furthermore, above the flat plate portion 17b of the first inner fender 17 is formed a small opening 23 smaller than the induction port 14b so that a running wind is introduced toward a rectifier regulator 21 through the small opening 23.

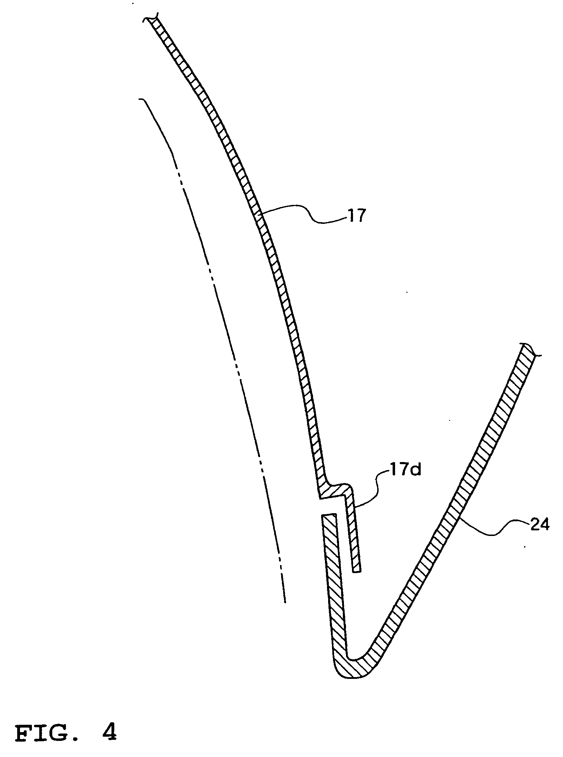

Moreover, the side edges 17d of the first inner fender 17 are connected to a body cowl 24, as shown in Fig. 4.

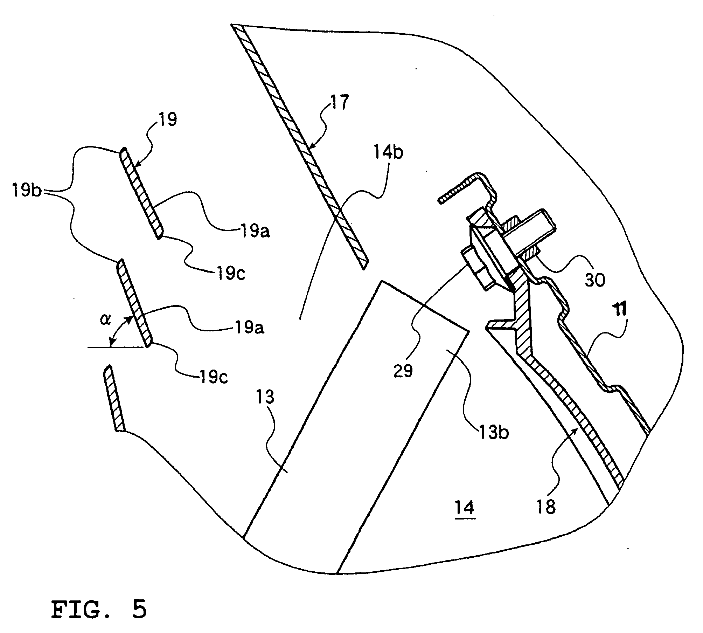

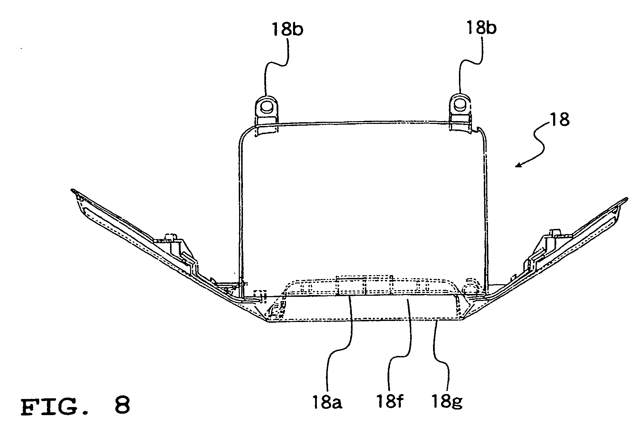

On the other hand, a second inner fender 18 assumes the shape as shown in Fig. 8 to Fig. 10, having forward ends 18b attached to the body frame 11 with bolts 29 and nuts 30 at a position above the upper end 13b of the radiator 13, as shown in Fig. 5, and extends rearwardly from that position to form an upper wall and the like of the wind guide path 14.

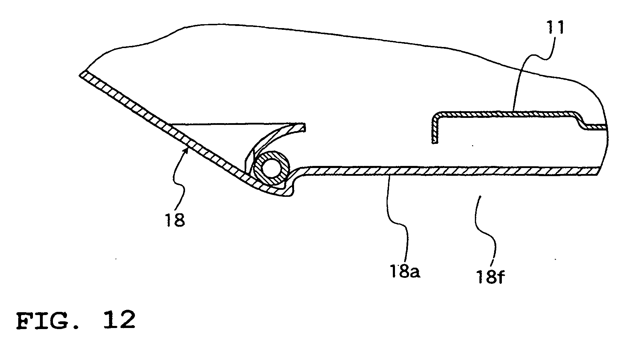

An discharge port 14a of the wind guide path 14 is formed by the first and second inner fenders 17, 18, and rearwardly of the discharge port 14a is formed, on the second inner fender 18 (body cover), a ceiling wall 18a located a step higher than the body bottom 25, as shown in Fig. 3 and Fig. 12, whereby an upwardly recessed portion 18f is formed adjoining the discharge port 14a.

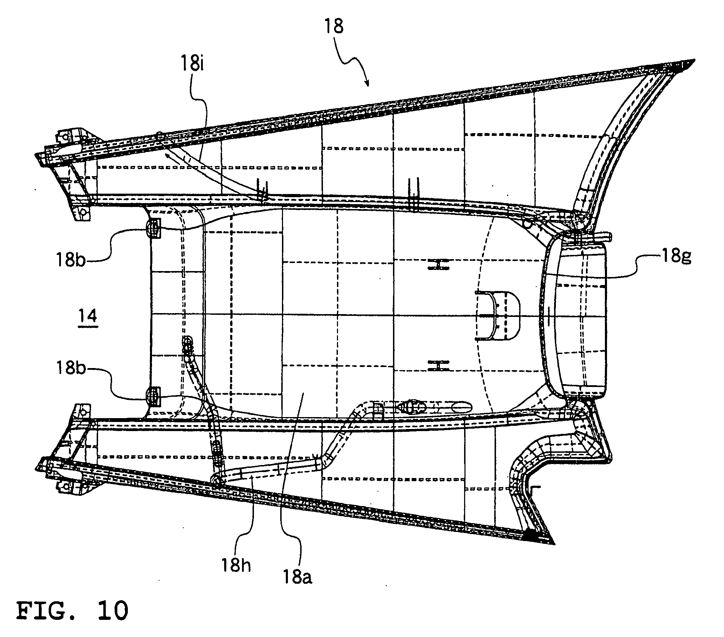

Further, the second inner fender 18 forming the body bottom part is formed with a hanging portion 18g projecting downwardly from the body bottom 25, at a position where the rear end of the recessed portion 18f is formed. Also, the second inner fender 18 is provided with a drain pipe 18h connected to a filler cover and another drain pipe 18i connected to a recovery tank, as shown in Fig. 10.

Reference numeral 32 in Fig. 3 designates a fuel tank.

Now, the function of this arrangement will be described.

When a vehicle runs, a running wind introduced into the body cover through the small opening 23 allows the rectifier regulator 21 to be cooled down and is sent toward the engine.

In a region under the small opening 23, the running wind strikes against the flat plate portion 17b of the first inner fender 17.

The running wind flows downwardly while guided by the sloping flat plate portion 17b, passes through the plurality of guide vanes 19a of the flap member 19, and flows from the induction port 14b into the wind guide path 14 while guided by these guide vanes 19a.

At this time, since the plurality of guide vanes 19a are each formed such that its inclination angle α (alpha) with respect to the horizontal or ground level is larger for a guide vane 19a at a lower position (Fig. 5), the running wind guided by the flat plate portion 17b can be directed efficiently toward the radiator 13.

That is, the inclination angle of the running wind guided obliquely downwardly by the flat plate portion 17b is small around the upper part of the flap member 19, as shown in Fig. 3 by the arrows, but becomes larger toward the bottom. Since the inclination angle α (alpha) of the guide vane 19a is set so as to be changed corresponding to the direction of the flow, the running wind can be directed toward the radiator 13 efficiently through the flap member 19.

Also, since the inclination angle α (alpha) of the guide vane 19a is increased toward the bottom, stones or the like caught by the front wheel can be blocked by these guide vanes 19a, preventing their collision against the radiator.

The running wind flowing into the wind guide path 14 passes through the radiator 13 to thereby cool down the radiator 13 and is discharged downwardly of the body from the discharge port 14a formed in the bottom part of the body. In this case, since the ceiling wall 18a located a step higher than the body bottom 25 is formed to form the recessed portion 18f adjoining the discharge port 14a therebehind and the running wind flowing toward the rear of the vehicle along the body bottom 25 as shown by the arrow causes a negative pressure in the recessed portion 18f, the air in the wind guide path 14 can be drawn out easily. Therefore, since a smoother flow of the running wind is obtained in the wind guide path 14, cooling efficiency of the radiator 13 will be increased by a simple improvement in the construction.

In addition, the discharge port 14a is formed in the second inner fender 18 forming the body bottom part, which enables its width in the lateral direction of the vehicle to be increased, thereby increasing the introduction volume of the running wind.

Further, a running wind flowing downwardly from the front face of the first inner fender 17 as shown in Fig. 3 by the arrow, runs rearwardly through the lower end corner 17c along the body bottom. In this case, since the lower end corner 17c of the first inner fender 17 is formed in the shape of a curved surface and the running wind flows more smoothly along the curved surface than when the corner is formed into an edge-like shape, generation of a turbulent flow is suppressed in this part and the running wind running rearwardly along the body bottom 25 flows smoothly without being hindered by the turbulent flow, so that the negative pressure at the discharge port 14a of the wind guide path 14 can be increased, resulting in a faster flow of the running wind in the wind guide path 14 as well.

Furthermore, the second inner fender 18 is formed with the hanging portion 18g projecting downwardly from the body bottom 25, at a position where the rear end of the recessed portion 18f is formed, thereby effecting improvement in the water cutting ability by the hanging portion 18g.

Further, the first inner fender 17 covering a region behind the front wheel is formed, on the lower side, with the induction port 14b for a running wind to be introduced, the radiator 13 is disposed rearwardly of and in the vicinity of the induction port 14b, and above the induction port 14b is formed the flat plate portion 17b for introducing a running wind to the induction port 14b, so that the running wind striking against the flat plate portion 17b is guided by the flat plate portion 17b to be introduced to the induction port 14b. Therefore, the running wind can be introduced smoothly into the wind guide path 14. Also, since the radiator 13 is disposed in the wind guide path 14, the radiator 13 can be cooled down more effectively by the running wind smoothly introduced into the wind guide path 14.

Further, since the radiator 13 is disposed obliquely such that its upper end 13b is positioned further rearward than the lower end 13a, a running wind entering obliquely from the induction port 14b flows into the radiator 13 approximately vertically, which increases the velocity of the running wind passing through the radiator 13, thereby improving the cooling performance of the radiator 13.

In addition, as a result of the small opening 23 being formed above the flat plate portion 17b, the rectifier regulator 21 can be effectively cooled down.

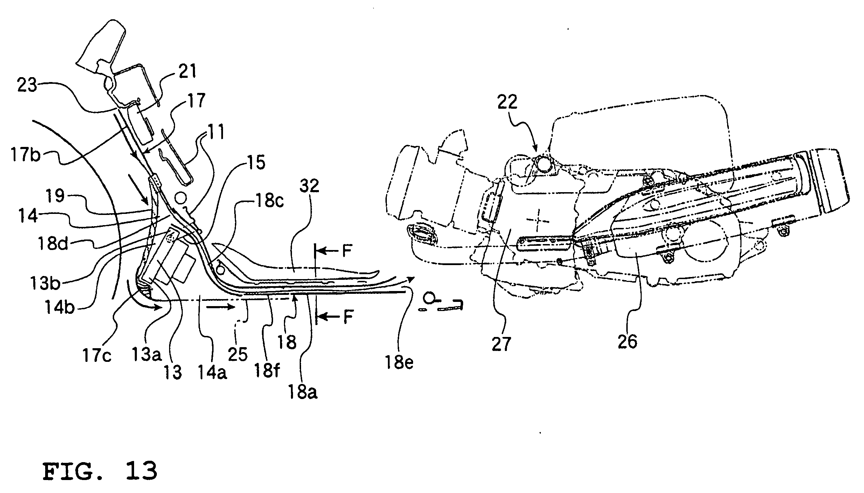

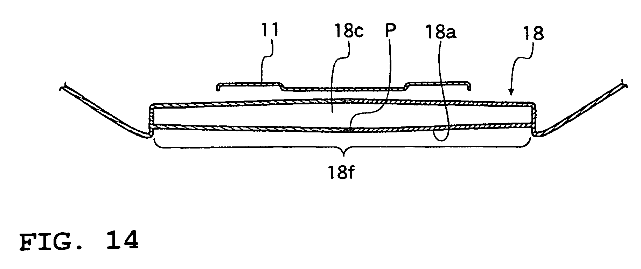

In Fig. 13 and Fig. 14 a second embodiment of this invention is shown.

In the embodiment 2 of this invention, adjacent to the wind guide path 14 of the radiator 13 is formed an engine side wind guide path 18c in the second inner fender 18.

That is, the second inner fender 18 is divided into left and right sections approximately at the laterally central portion P, and the engine side wind guide path 18c is formed integral with the second inner fender 18, whose width in the lateral direction is formed to be approximately the same as that of the ceiling wall 18a, as shown in Fig. 14. A forward end opening 18d of the engine side wind guide path 18c opens above the upper end 13b of the radiator 13, and a rear end opening 18e opens toward the engine 22.

As a result of the engine side wind guide path 18c being provided in this way, a running wind striking against the flat plate portion 17b of the first inner fender 17 and guided obliquely downwardly, flows into the engine side wind guide path 18c, passing through the wind guide path 18c, and is sent toward the engine 22 from the rear end opening 18e. Thus, the engine 22 can be cooled down successfully.

In addition, since the engine side wind guide path 18c is formed integral with the second inner fender 18, no separate parts need be provided.

Constructions and functions other than those described above are the same as in the embodiment 1 and the explanation is omitted.

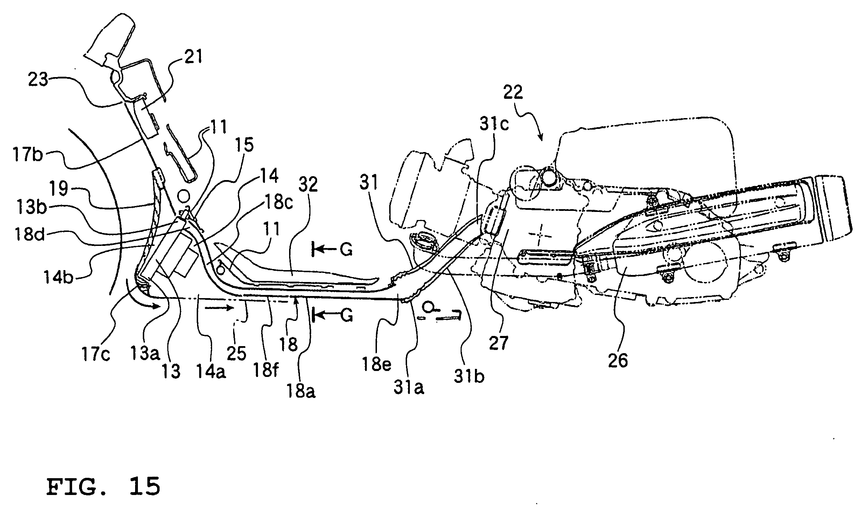

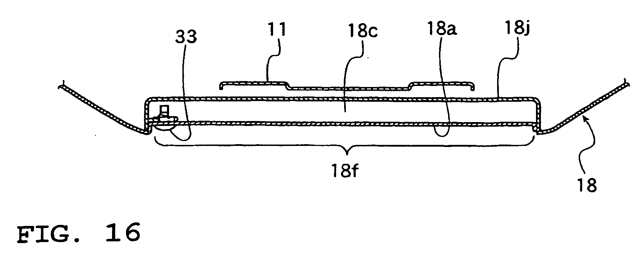

In Fig. 15 and Fig. 16 a third embodiment of this invention is shown.

The arrangement of the embodiment 3 is different from that of the embodiment 2 in the structure of the engine side wind guide path 18c.

That is, in this engine side wind guide path 18c, the forward end opening 18d is disposed behind the upper end 13b of the radiator 13, and a rubber duct 31 is connected to the rear end opening 18e. The rubber duct 31 is formed with a bellows 31a, the bellows 31a is fitted on the rear end opening 18e for connection, and an extension 31b of the bellows 31a extends obliquely upwardly toward the rear. A discharge port 31c of the extension 31b opens toward any given portion (for example, an air cleaner 27) of the engine 22.

In this case, the second inner fender 18 is divided, as shown in Fig. 16, into left and right sections; in a portion on the left side in the figure is formed a ceiling wall 18a; in a portion on the right side in the figure is formed an upper wall 18j; and both divided sections are fastened together with a bolt 33 so that the engine side wind guide path 18c is formed by the upper wall 18j, the ceiling wall 18a and the like.

As a result of effectively introducing the running wind to the air cleaner 27 in this way, improvement in charging efficiency of the engine 22 can be effected. In addition, if the discharge port 31c opens in the vicinity of an exhaust pipe 26, the exhaust pipe 26 likely to be heated to a high temperature can be cooled down successfully. Further, if the discharge port 31c opens in the vicinity of a belt chamber, the belt chamber likely to be heated to a high temperature can be cooled down successfully.

As described above, in order to provide a wind guide structure for a motorcycle capable of cooling a radiator efficiently with simple construction, it is proposed that rearwardly of a front wheel a radiator 13 is disposed, a wind guide path 14 of a running wind passing through the radiator 13 is formed by first and second inner fenders 17, 18, a discharge port 14a of the wind guide path 14 on the downstream side from the radiator 13 is formed by the first and second inner fenders 17, 18, and rearwardly of the discharge port 14a is formed a ceiling wall 18a located a step higher than the bottom 25 of the body, so that an upwardly recessed portion 18f is formed adjoining the discharge port 14a.

Of course, the various features of all embodiments as described above are combinable with features of the other embodiments, respectively.

## Claims

1. Motorcycle having a wind guide structure, wherein
a radiator (13) is provided rearwardly of a front wheel of the motorcycle,
a wind guide path (14) for guiding a running wind passing through the radiator (13) is formed by a body cover (17,18) along a bottom part of the body of the motorcycle, and
an induction port (14b) for a running wind is formed to be introduced in a body cover (17,18) covering a region behind the front wheel,
**characterized in that**
said radiator (13) is disposed obliquely such that an upper end (13b) thereof is positioned further rearward than a lower end (13a) thereof,
said induction port (14b) is disposed to guide the running wind into the radiator (13) approximately vertically, and
a flat plate portion (17b) above said induction port (14b) is formed for introducing the running wind to said induction port (14b).

2. Motorcycle according to claim 1, **characterized in that** a flap member (19) is disposed in front of said radiator (13); said flap member (19) is formed with a plurality of guide vanes (19a) for guiding a running wind toward said radiator (13); said guide vanes (19a) are parallel in a lateral direction and inclined in a longitudinal direction of the motorcycle.

3. Motorcycle according to claim 1 or 2, **characterized in that** rearwardly of a discharge port (14a) of the wind guide path (14) a ceiling wall (18a) is located a step higher than a bottom (25) of the body, and that an upwardly recessed portion (18f) is formed adjoining said discharge port (14a).

4. Motorcycle according to at least one of claims 1 to 3, **characterized in that** a connecting portion of the lower end of a vertical wall (17) covering a region behind said front wheel and the forward end of said body bottom (25), or a lower end corner (17c) of said body cover (17,18), is formed into a curved surface.

5. Motorcycle according to at least one of claims 1 to 4, **characterized in that** on the body bottom part (25) of said body cover (17,18) is formed a hanging portion (18g) projecting downwardly from said body bottom (25), at a position where the rear end of said recessed portion (18f) is formed.

6. Motorcycle according to at least one of claims 1 to 5, **characterized in that** the wind guide path (14) is formed extending rearwardly from said induction port (14b) and said radiator (13) is disposed in the wind guide path (14).

7. Motorcycle according to at least one of claims 1 to 6, **characterized in that** a small opening (23) smaller than said induction port (14b) is formed above said flat plate portion (17b) so that a running wind can be introduced into the body cover (17,18) through the small opening (28), and/or **in that** an engine side wind guide path (18c) for introducing a running wind toward an engine (22) is provided adjacent to said wind guide path (14).

8. Motorcycle according to at least one of claims 1 to 7, **characterized in that** an engine side wind guide path (18c) extends from a region behind said front wheel to a region near an exhaust pipe, an air cleaner or a belt chamber on the engine side.

9. Motorcycle according to at least one of claims 1 to 8, **characterized in that** an engine side wind guide path (18c) is formed by said body cover (17,18) forming the external appearance of the body.

10. Motorcycle according to at least one of claims 2 to 9, **characterized in that** said guide vanes (19a) are inclined such that a rear end (19c) thereof is positioned lower than a forward end (19b) thereof, wherein an inclination angle (α) is larger for a guide vane (19a) at a lower position with respect to a guide vane (19a) at a higher position.

## Patentansprüche

1. Motorrad mit einem Windführungsaufbau, wobei
ein Kühler (13) rückwärts des Vorderrades des Motorrades vorgesehen ist,
ein Windführungspfad (14) zum Führen des Fahrtwindes, der durch den Kühler (13) hindurchgeht, durch eine Karosserieabdeckung (17, 18) entlang eines Bodenteiles der Karosserie des Motorrades gebildet ist,
und
eine Einlassöffnung (14b) für einen Fahrtwind gebildet ist, um in eine Karosserieabdeckung (17, 18), die den Bereich hinter dem Vorderrad abdeckt, eingeleitet zu werden,
**dadurch gekennzeichnet, dass**
der Kühler (13) derart schräg angeordnet ist, das ein oberes Ende (13b) desselben weiter rückwärts als ein unteres Ende (13a) desselben positioniert ist,
die Einlassöffnung (14b) angeordnet ist, um den Fahrtwind in den Kühler (13) ungefähr vertikal zu führen, und
ein flacher Plattenabschnitt (17b) oberhalb der Einlassöffnung (14b) zum Einleiten des Fahrtwindes in die Einlassöffnung (14b) gebildet ist.

2. Motorrad nach Anspruch 1, **dadurch gekennzeichnet, dass** ein Klappenteil (19) vor dem Kühler (13) angeordnet ist; wobei das Klappenteil (19) mit einer Mehrzahl von Führungsflügeln (19a) zum Führen des Fahrtwindes in die Richtung zu dem Kühler (13) gebildet ist; die Führungsflügel (19a) in einer seitlichen Richtung parallel und in einer Längsrichtung des Motorrades geneigt sind.

3. Motorrad nach Anspruch 1 oder 2, **dadurch gekennzeichnet, dass** hinter einer Auslassöffnung (14a) des Windführungspfades (14) eine Deckenwand (18a) eine Stufe höher als ein Boden (25) der Karosserie angeordnet ist und dass ein aufwärtiger ausgesparter Abschnitt (18f) angrenzend an die Auslassöffnung gebildet ist.

4. Motorrad nach zumindest einem der Ansprüche 1 bis 3, **dadurch gekennzeichnet, dass** ein Verbindungsabschnitt des unteren Endes einer vertikalen Wand (17), die einen Bereich hinter dem Vorderrad und das vordere Ende der Karosserieabdeckung (25), oder eine untere Endecke (17c) der Karosserieabdeckung (17, 18) mit einer gekrümmten Oberfläche ausgebildet sind.

5. Motorrad nach zumindest einem der Ansprüche 1 bis 4, **dadurch gekennzeichnet, dass** an dem Karosseriebodenteil (25) der Karosserieabdeckung (17, 18) ein hängender Abschnitt (18g), der von dem Karosserieboden (25) nach unten vorspringt, an einer Position gebildet ist, wo das hintere Ende des ausgesparten Abschnittes (18f) gebildet ist.

6. Motorrad nach zumindest einem der Ansprüche 1 bis 5, **dadurch gekennzeichnet, dass** der Windführungspfad (14) sich nach hinten von der Einlassöffnung (14b) erstreckend gebildet ist und der Kühler (13) in dem Windführungspfad (14) angeordnet ist.

7. Motorrad nach zumindest einem der Ansprüche 1 bis 6, **dadurch gekennzeichnet, dass** eine kleine Öffnung (23), kleiner als die Einlassöffnung (14b), oberhalb des flachen Plattenabschnittes (17b) gebildet ist, so dass ein Fahrtwind in die Karosserieabdeckung (17, 18) durch die kleine Öffnung (28) eingeleitet werden kann, und / oder **dadurch**, dass ein motorseitiger Windführungspfad (18c) zum Einleiten eines Fahrtwindes in die Richtung zu einem Motor (22) benachbart zu dem Windführungspfad (14) vorgesehen ist.

8. Motorrad nach zumindest einem der Ansprüche 1 bis 7, **dadurch gekennzeichnet, dass** sich ein motorseitiger Windführungspfad (18c) von einem Bereich hinter dem Vorderrad zu einem bereich nahe des Auslassrohres, einem Luftfilter oder einer Riemenkammer auf der Motorseite erstreckt.

9. Motorrad nach zumindest einem der Ansprüche 1 bis 8, **dadurch gekennzeichnet, dass** ein motorseitiger Windführungspfad (18c) durch die Karosserieabdeckung (17, 18) gebildet ist, die das äußere Erscheinungsbild der Karosserie bildet.

10. Motorrad nach zumindest einem der Ansprüche 2 bis 9, **dadurch gekennzeichnet, dass** die Führungsflügel (19a) derart geneigt sind, dass ein hinteres Ende (19c) derselben niedriger als ein vorderes Ende (19b) derselben positioniert ist, wobei ein Neigungswinkel (α) für einen Führungsflügel (19a) an einer unteren Position, in Bezug auf einen Führungsflügel (19a) an einer höheren Position, größer ist.

## Revendications

1. Motocycle comprenant un dispositif de guidage du vent, dans laquelle :
un radiateur (13) est prévu à l'arrière d'une roue avant du motocycle,
un chemin de guidage du vent (14), pour guider un vent de roulage passant à travers le radiateur (13), est formé, par un couvercle de carrosserie (17, 18), le long d'une partie inférieure de la carrosserie du motocycle, et
un orifice d'aspiration (14b) pour un vent de roulage est formé, pour être introduit dans un couvercle de carrosserie (17, 18) couvrant une région se trouvant derrière la roue avant,
**caractérisé en ce que**
ledit radiateur (13) est disposé obliquement, de manière qu'une extrémité supérieure (13b) de celui-ci soit positionné plus à l'arrière qu'une extrémité inférieure (13a) de celui-ci,
ledit orifice d'aspiration (14b) est disposé pour guider le vent de roulage à l'intérieur du radiateur (13) de façon à peu près verticale, et
une partie de plaque (17b) plate, au-dessus dudit orifice d'aspiration (14b), est formée pour introduire le vent de roulage audit orifice d'aspiration (14b).

2. Motocycle selon la revendication 1, **caractérisé en ce qu'**un organe formant persienne (19) est disposé à l'avant dudit radiateur (13), ledit organe formant persienne (19) est muni d'une pluralité d'aubes de guidage (19a) pour guider un vent de roulage vers ledit radiateur (13) ; lesdites aubes de guidage (19a) étant parallèles en une direction latérale et inclinées en une direction longitudinale du motocycle.

3. Motocycle selon la revendication 1 ou 2, **caractérisé en ce que**, à l'arrière d'un orifice de décharge (14a) du chemin de guidage du vent (14), est placée une paroi de plafond (18a), à un degré plus élevé qu'un fond (25) de la carrosserie, et **en ce qu'**une partie (18f) creusée vers le haut est formée, adjacente audit orifice de décharge (14a).

4. Motocycle selon au moins l'une des revendications 1 à 3, **caractérisé en ce qu'**une partie de connexion de l'extrémité inférieure d'une paroi verticale (17), couvrant une région située derrière ladite roue avant et l'extrémité avant de ladite partie de carrosserie (25), ou un angle d'extrémité inférieure (17c) dudit couvercle de carrosserie (17, 18), est formé en une surface incurvée.

5. Motocycle selon au moins l'une des revendications 1 à 4, **caractérisé en ce que**, sur la partie inférieure de carrosserie (25) dudit couvercle de carrosserie (17, 18) est formée une partie d'accrochage (18g), faisant saillie vers le bas depuis ledit fond de carrosserie (25), à une position à laquelle l'extrémité arrière de ladite partie creusée (18f) est formée.

6. Motocycle selon au moins l'une des revendications 1 à 5, **caractérisé en ce que** le chemin de guidage du vent (14) est formé en s'étendant vers l'arrière depuis ledit orifice de réduction (14b), et ledit radiateur (13) est disposé dans le chemin de guidage du vent (14).

7. Motocycle selon au moins l'une des revendications 1 à 6, **caractérisé en ce qu'**une petite ouverture (23), plus petite que ledit orifice d'aspiration (14b), est formée au-dessus de ladite partie de plaque (17b) plate, de manière qu'un vent de roulage puisse être introduit dans le couvercle de carrosserie (17, 18) en passant à travers la petite ouverture (28) et/ou **en ce qu'**un chemin de guidage du vent (18c) situé côté moteur thermique, pour introduire un vent de roulage vers un moteur thermique (22), est prévu, de façon adjacente audit chemin de guidage du vent (14).

8. Motocycle selon au moins l'une des revendications 1 à 7, **caractérisé en ce qu'**un chemin de guidage du vent (18c), du côté moteur thermique, s'étend depuis une région située derrière ladite roue avant à une région située à proximité d'un tube d'échappement, un filtre à air ou une chambre à courroie située sur le côté moteur thermique.

9. Motocycle selon au moins l'une revendications 1 à 8, **caractérisé en ce qu'**un chemin de guidage du vent (18c), du côté moteur thermique, est formé par ledit couvercle de carrosserie (17, 18), formant l'aspect externe de la carrosserie.

10. Motocycle selon au moins l'une des revendications 2 à 9, **caractérisé en ce que** lesdites aubes de guidage (19c) sont inclinées, de manière qu'une extrémité arrière (19c) de celles-ci soit positionnée à un niveau inférieur à celui d'une extrémité avant (19b) de celles-ci, dans laquelle un angle d'inclinaison (α), pour une aube de guidage (19a) située à une position inférieure, est supérieur à ce qu'il est pour une aube de guidage (19a) située à une position supérieure.
